# EUROPÄISCHE PATENTSCHRIFT

(11) **EP 2 439 018 B1**
(45) Veröffentlichungstag und Bekanntmachung des Hinweises auf die Patenterteilung: **30.03.2016**
(21) Anmeldenummer: 11007459.8
(22) Anmeldetag: 14.09.2011
(51) Int. Cl.: B24C 7/00, A61C 3/025

(54) **Dentalgerätetankvorrichtung**
Dental device tank device
Dispositif de réservoir pour appareils dentaires

(30) Priorität: 07.10.2010 DE 102010047608
(43) Veröffentlichungstag der Anmeldung: 11.04.2012
(73) Patentinhaber: Renfert GmbH, 78247 Hilzingen (DE)
(72) Erfinder: Fritz, Jörg, 78465 Konstanz (DE); Mahn, Dennis, 78465 Konstanz (DE)
(74) Vertreter: Daub, Thomas

(56) Entgegenhaltungen:
- DE-U1- 29 508 873
- US-A- 3 626 841

## Beschreibung

### Stand der Technik

Die Erfindung geht aus von einer Dentalgerätetankvorrichtung nach dem Oberbegriff des Anspruchs 1 (siehe z.B. US*-*A-3626841).

Es sind bereits Dentalgerätetankvorrichtungen mit einem Tankdeckelelement und einem Tankbehälterelement bekannt. Eine Drucksensoreinheit ist in ein Schlauchsystem eines Dentalstrahlgeräts integriert und über das Schlauchsystem des Dentalstrahlgeräts mit der Dentalgerätetankvorrichtung verbunden.

### Vorteile der Erfindung

Die Erfindung geht aus von einer Dentalgerätetankvorrichtung, insbesondere Dentalstrahlgerätetankvorrichtung, mit zumindest einer Grundkörpereinheit.

Die Erfindung schlägt eine Dentalgerätetankvorrichtung mit den Merkmalen des Anspruchs 1 vor.

Es wird vorgeschlagen, dass die Dentalgerätetankvorrichtung zumindest eine in die Grundkörpereinheit zumindest teilweise integrierte Sensoreinheit aufweist. Unter einer "Dentalgerätetankvorrichtung" soll insbesondere eine Vorrichtung verstanden werden, die zumindest einen Teil eines Tanks, der dazu vorgesehen ist, mit einem Dentalgerät, insbesondere einem Dentalstrahlgerät, gekoppelt zu werden, bildet. Unter "vorgesehen" soll insbesondere "speziell ausgelegt" und/oder "speziell ausgestattet" verstanden werden. Unter einer "Sensoreinheit" soll in diesem Zusammenhang insbesondere eine Einheit verstanden werden, die dazu vorgesehen ist, zumindest eine Kenngröße, vorzugsweise eine physikalische Kenngröße, zu erfassen und vorzugsweise an ein Ausgabeelement weiterzugeben. Unter "integriert" soll in diesem Zusammenhang insbesondere verstanden werden, dass die Sensoreinheit zumindest teilweise von der Grundkörpereinheit umschlossen ist.

Dadurch kann eine vorteilhaft kompakte Bauform der Dentalgerätetankvorrichtung erreicht werden. Zudem kann ein vorteilhafter Schutz der Sensoreinheit insbesondere gegen Stöße von außen erreicht werden. Ferner kann ein bevorzugt hoher Bedienkomfort für einen Bediener erreicht werden, indem die Sensoreinheit bei einem Wechsel der Dentalgerätetankvorrichtung verliersicher mit der Grundkörpereinheit verbunden bleibt und gemeinsam mit der Dentalgerätetankvorrichtung ausgewechselt wird. Zudem können vorteilhaft Bauteile, wie insbesondere Anschlussschläuche, eingespart werden. Zudem kann durch die erfindungsgemäße Ausgestaltung eine Vorteilhaft einfache Montage der Dentalgerätetankvorrichtung, insbesondere als Montageeinheit, erreicht werden. Ferner kann die Dentalgerätetankvorrichtung durch die zumindest teilweise in die Grundkörpereinheit integrierte Sensoreinheit eine bevorzugt einfache Nachrüstung der erfindungsgemäßen Dentalgerätetankvorrichtung erreicht werden.

Ferner wird vorgeschlagen, dass die Sensoreinheit wenigstens eine Drucksensoreinheit umfasst. Die Drucksensoreinheit kann vorzugsweise von einem Manometer gebildet sein. Dadurch kann eine vorteilhaft präzise Einstellung und/oder Überwachung eines Drucks und damit einer Strahlenergie erreicht werden, wodurch ein bevorzugt hoher Bedienkomfort erreicht werden kann.

Ist die Grundkörpereinheit von einem Dentalgerätetankdeckel gebildet, kann eine gute Zugänglichkeit zu der Sensoreinheit und eine vorteilhaft einfache Konstruktion erreicht werden. Vorzugsweise korrespondiert der Dentalgerätetankdeckel zu einem Dentalgerätetankbehälter. Vorzugsweise bilden der Dentalgerätetankdeckel und der Dentalgerätetankbehälter zumindest teilweise eine Dentalgerätetankeinheit. Unter einem "Dentalgerätetankbehälter" soll insbesondere ein Bauteil oder eine Baugruppe verstanden werden, das, bzw. die dazu vorgesehen ist, insbesondere Strahlgut aufzunehmen. In einem besonders bevorzugten Ausführungsbeispiel bildet der Dentalgerätetankbehälter insbesondere einen größeren Teil der Dentalgerätetankeinheit und der Dentalgerätetankdeckel bildet einen kleineren Teil der Dentalgerätetankeinheit. Unter einem "Dentalgerätetankdeckel" soll insbesondere ein Bauteil oder eine Baugruppe verstanden werden, das bzw. die dazu vorgesehen ist, insbesondere den Dentalstrahlgerätetankbehälter vorzugsweise luftdicht zu verschließen.

Des Weiteren wird vorgeschlagen, dass die Dentalgerätetankvorrichtung wenigstens ein Entlüftungsventil aufweist, das zumindest teilweise mit der Sensoreinheit verbunden ist. Unter einem "Entlüftungsventil" soll in diesem Zusammenhang insbesondere ein Bauteil oder eine Baugruppe verstanden werden, die dazu vorgesehen ist, eine Ventilfläche zu bilden, die zur Abdichtung an einer korrespondierenden Dichtfläche in zumindest einer Dichtstellung vorgesehen ist. Vorzugsweise bildet die Dichtfläche des Entlüftungsventils mit der korrespondierenden Dichtfläche in einer weiteren Dichtstellung einen Durchlass, der dazu vorgesehen ist, insbesondere Luft durchzulassen und vorzugsweise einen Innendruck insbesondere der Dentalgerätetankvorrichtung an einen Umgebungsdruck anzupassen. Unter "verbunden" soll in diesem Zusammenhang insbesondere verstanden werden, dass die Sensoreinheit und das Entlüftungsventil gemeinsam bewegbar, insbesondere gemeinsam verschiebbar, vorzugsweise gegenüber der Grundkörpereinheit, ausgestaltet sind. Durch das Entlüftungsventil, das vorzugsweise zumindest teilweise mit der Sensoreinheit verbunden ist, können insbesondere Bauteile eingespart werden und eine vorteilhaft kompakte Bauweise kann erreicht werden.

Es wird vorgeschlagen, dass die Sensoreinheit bewegbar in der Grundkörpereinheit gelagert ist. Unter"bewegbar" soll in diesem Zusammenhang insbesondere verstanden werden, dass die Position der Sensoreinheit entlang einer Wegstrecke insbesondere durch einen Bediener insbesondere rotatorisch und/oder besonders vorteilhaft translatorisch veränderbar ist. Insbesondere soll dabei eine Bewegung um eine Strecke, die insbesondere größer als 1 mm, vorzugsweise größer als 3 mm und besonders bevorzugt größer als 5 mm ist. Durch die erfindungsgemäße Ausgestaltung kann vorzugsweise erreicht werden, dass die Sensoreinheit vorteilhaft flexibel in die Grundkörpereinheit der Dentalgerätetankvorrichtung zumindest teilweise integriert werden kann.

Es wird vorgeschlagen, dass die Sensoreinheit verschiebbar in der Grundkörpereinheit gelagert ist. Unter "verschiebbar" soll in diesem Zusammenhang insbesondere verstanden werden, dass die Position der Sensoreinheit entlang einer Wegstrecke insbesondere durch einen Bediener vorzugsweise translatorisch veränderbar ist. Insbesondere soll dabei eine Bewegung um eine Strecke, die insbesondere größer als 1 mm, vorzugsweise größer als 3 mm und besonders bevorzugt größer als 5 mm ist. Durch die erfindungsgemäße Ausgestaltung kann vorzugsweise erreicht werden, dass die Sensoreinheit vorteilhaft flexibel in die Grundkörpereinheit der Dentalgerätetankvorrichtung zumindest teilweise integriert werden kann.

Ferner wird vorgeschlagen, dass die Sensoreinheit als Betätigungselement für das Entlüftungsventil dient. Unter einem "Betätigungselement" soll in diesem Zusammenhang insbesondere ein Element verstanden werden, das zumindest eine Betätigungsfläche aufweist, die zur Betätigung durch einen Bediener vorgesehen ist, und das zumindest teilweise wirkungsmäßig mit dem Entlüftungsventil verbunden ist. In einem besonders bevorzugten Ausführungsbeispiel kann das Betätigungselement insbesondere von einem Betätigungsknopf oder von einem anderen, einem Fachmann als sinnvoll erscheinendem Element gebildet sein. Dadurch können auf vorteilhaft einfache Weise Bauteile eingespart werden. Zudem kann eine bevorzugte Platzersparnis und dadurch eine vorteilhaft kompakte Konstruktion der Dentalgerätetankvorrichtung erreicht werden.

### Zeichnung

Weitere Vorteile ergeben sich aus der folgenden Zeichnungsbeschreibung. In der Zeichnung ist ein Ausführungsbeispiel der Erfindung dargestellt. Die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine räumliche Darstellung eines Dentalstrahlgeräts mit einer erfindungsgemäßen Dentalgerätetankvorrichtung und
- Fig. 2: eine schematische Schnittdarstellung der Dentalgerätetankvorrichtung aus Figur 1.

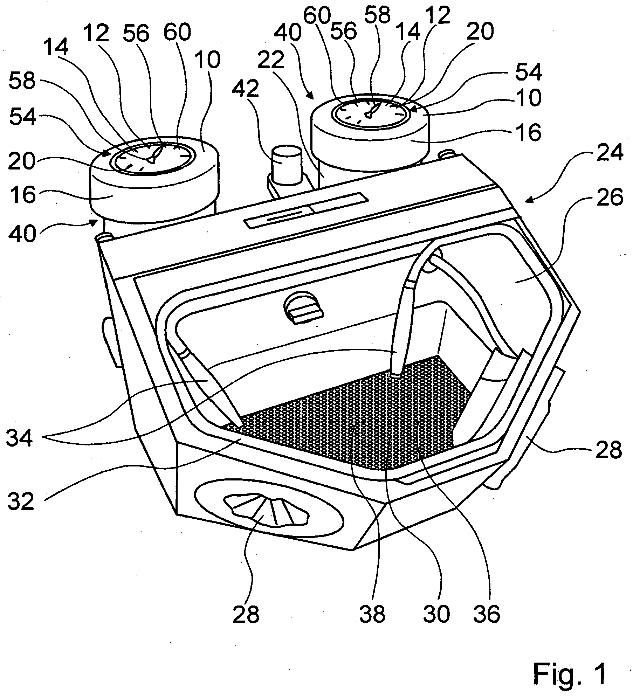

Figur 1 zeigt ein Dentalstrahlgerät 24 mit einer Bearbeitungskammer 26, die seitlich zwei Eingriffausnehmungen 28 für einen Bediener des Dentalstrahlgeräts 24 aufweist. Die Bearbeitungskammer 26 weist eine sechseckige Kontur auf und ist in einem oberen Bereich mittels eines transparenten Deckels 30 verschlossen. Der Deckel 30 der Bearbeitungskammer 26 liegt in einem geschlossenen Zustand auf einem Dichtungselement 32 der Bearbeitungskammer 26 auf. Innerhalb der Bearbeitungskammer 26 sind Bearbeitungswerkzeuge 34 angeordnet. Ein Boden 36 der Bearbeitungskammer 26 weist ein Kunststoffgitter 38 auf. Das Kunststoffgitter 38 liegt lose auf dem Boden 36 auf. In einem Bearbeitungszustand kann Strahlgut somit durch das Kunststoffgitter 38 aus einem Bearbeitungsbereich in der Bearbeitungskammer 26 nach unten durchfallen und wird von dem Boden 36 aufgefangen.

In einem den Eingriffausnehmungen 28 abgewandten Bereich der Bearbeitungskammer 26 des Dentalstrahlgeräts 24 sind zwei Dentalgerätetankeinheiten 40 angeordnet. Die Dentalgerätetankeinheiten 40 sind lösbar mit dem Dentalstrahlgerät 24 verbunden. Beide Dentalgerätetankeinheiten 40 umfassen jeweils eine Dentalgerätetankvorrichtung, die einen Dentalgerätetankdeckel 16 umfasst, und eine Dentalgerätetankvorrichtung, die einen Dentalgerätetankbehälter 22 umfasst. Jede Dentalgerätetankeinheit 40 ist mittels eines nicht dargestellten Schlauchsystems mit den Bearbeitungswerkzeugen 34 verbunden. Strahlgut, welches sich in der Dentalgerätetankeinheit 40 befindet, wird als Strahlgut-Luft-Gemisch über das Schlauchsystem zu dem Bearbeitungswerkzeug 34 in der Bearbeitungskammer 26 geführt. Die Dentalgerätetankeinheit 40 steht unter einem Überdruck. Dieser Überdruck kann vom Bediener über eine Einstelleinheit 42 variiert und eingestellt werden. Über die Einstellung des Überdrucks in der Dentalgerätetankeinheit 40 kann eine Strahlenergie des Strahlgut-Luft-Gemischs, welches aus einer Düse des Bearbeitungswerkzeugs 34 austritt, eingestellt werden.

In den Dentalgerätetankdeckel 16 ist eine von einer Drucksensoreinheit 14 gebildete Sensoreinheit 12 zum Ablesen und Überwachen eines eingestellten Überdrucks in der Dentalgerätetankeinheit 40 integriert. Die Drucksensoreinheit 14 ist als Manometer ausgebildet.

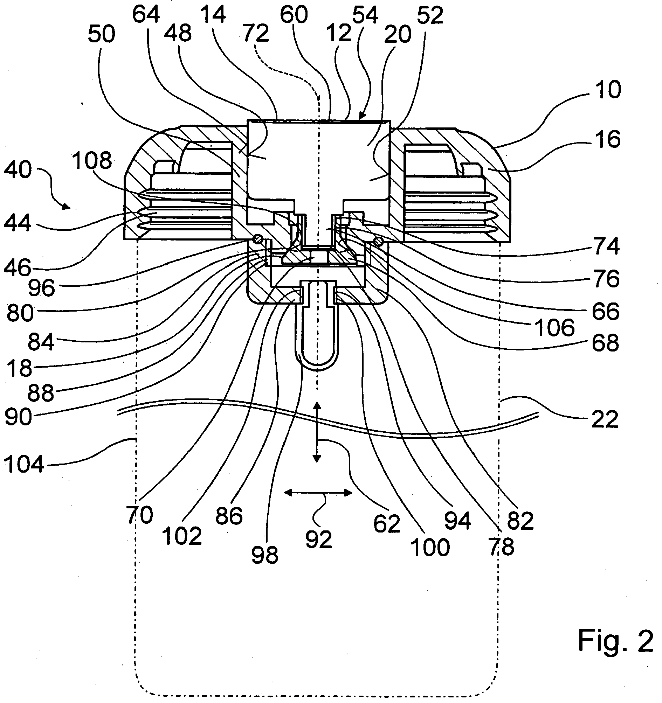

Die Dentalgerätetankeinheit 40 umfasst die Dentalgerätetankvorrichtung, die den Dentalgerätetankbehälter 22 aufweist, und die Dentalgerätetankvorrichtung, die den Dentalgerätetankdeckel 16 aufweist (Figur 2). Die Dentalgerätetankvorrichtung weist eine Grundkörpereinheit 10 auf, die als Dentalgerätetankdeckel 16 ausgebildet ist. Der Dentalgerätetankdeckel 16 umfasst ein Gewinde 44. Die weitere Dentalgerätetankvorrichtung der Dentalgerätetankeinheit 40 weist eine Grundkörpereinheit 104 auf, die als Dentalgerätetankbehälter 22 ausgebildet ist. Der Dentalgerätetankbehälter 22 weist ein korrespondierendes Gewinde 46 auf. Der Dentalgerätetankdeckel 16 ist auf den Dentalgerätetankbehälter 22 aufgeschraubt. Der Dentalgerätetankbehälter 22 ist aus einem transparenten Kunststoff gefertigt. Alternativ wäre auch denkbar, den Dentalgerätetankbehälter 22 aus insbesondere siliciumhaltigem Glas zu fertigen. Durch die Verwendung eines transparenten Materials kann ein Bediener des Dentalstrahlgeräts 24 einen Füllstand des Strahlguts vorteilhaft erkennen. Die Dentalgerätetankvorrichtung, die den Dentalgerätetankbehälter 22 umfasst, weist ein hier nicht dargestelltes Anschlusselement auf, an das das Schlauchsystem angeschlossen werden kann.

Die als Dentalgerätetankdeckel 16 ausgebildete Grundkörpereinheit 10 weist einen Aufnahmebereich 48 auf. Der Aufnahmebereich 48 ist einstückig mit der Grundkörpereinheit 10 ausgebildet. Der Aufnahmebereich 48 ist von einer zylinderförmigen Vertiefung der Grundkörpereinheit 10 gebildet. In dem Aufnahmebereich 48 ist die von dem Manometer gebildete Drucksensoreinheit 14 verschiebbar gelagert. Eine Seitenwand 50 des Aufnahmebereichs 48 bildet eine Führungsfläche 52 für die Drucksensoreinheit 14. Die Drucksensoreinheit 14 weist eine Ausgabeeinheit 54 auf, die in einem montierten Zustand der Drucksensoreinheit 14 parallel zu einer Haupterstreckungsebene der als Dentalgerätetankdeckel 16 ausgebildeten Grundkörpereinheit 10 angeordnet ist. Die Ausgabeeinheit 54 umfasst ein Anzeigeelement 56 zur Skalierung eines Wertebereichs. Zudem umfasst die Ausgabeeinheit 54 ein Zeigerelement 58 zum Anzeigen eines durch die Drucksensoreinheit 14 sensierten Werts mit Hilfe der Skalierung des Anzeigeelements 56. Ferner ist ein Schutzelement 60 vorgesehen, welches die Ausgabeeinheit 54 in einer Axialrichtung 62 abschließt.

Die Drucksensoreinheit 14 weist einen Führungsbereich 64 auf, der sich entlang eines äußersten Umfangs der Drucksensoreinheit 14 erstreckt. Der Führungsbereich 64 der Drucksensoreinheit 14 ist dazu vorgesehen, die Drucksensoreinheit 14 in dem Aufnahmebereich 48 des Dentalgerätetankdeckels 16 entlang der Führungsfläche 52 der Aufnahmeeinheit 48 in Axialrichtung 62 zu führen. Die Drucksensoreinheit 14 weist einen Aufnahmefortsatz 66 auf, der auf einer der Ausgabeeinheit 54 gegenüberliegenden Seite der Drucksensoreinheit 14 angeordnet ist.

An einem Ende der Drucksensoreinheit 14, das in einem montierten Zustand der Dentalgerätetankvorrichtung, die den Dentalgerätetankbehälter 22 umfasst, zugewandt ist, ist ein Entlüftungsventil 18 angeordnet. Das Entlüftungsventil 18 umfasst ein Ventilelement 68. Das Ventilelement 68 weist einen kegelstumpfförmig ausgebildeten Bereich und einen gerade zylinderförmig ausgestalteten Bereich auf, wobei sich an einer Deckfläche des Kegelstumpfs, die einen kleineren Radius aufweist als eine Grundfläche des Kegelstumpfs, der zylinderförmige Bereich anschließt, dessen Grundfläche der Deckfläche des Kegelstumpfs entspricht. Der kegelstumpfförmige Bereich und der zylinderförmige Bereich des Ventilelements 68 sind einstückig miteinander verbunden. Das Ventilelement 68 weist eine in Axialrichtung 62 durchgehende Ausnehmung 70 auf. Die Ausnehmung 70 ist rotationssymmetrisch zu einer Rotationssymmetrieachse 72 des Ventilelements 68 ausgebildet. Die Ausnehmung 70 weist zwei unterschiedlich große Durchmesser auf. Der Bereich der Ausnehmung 68 mit dem größeren Durchmesser erstreckt sich in Axialrichtung 62 vollständig durch den zylinderförmigen Bereich und teilweise durch den kegelstumpfförmigen Bereich des Ventilelements 68. Dieser Bereich der Ausnehmung 70 weist ein Innengewinde 74 auf. In einem montierten Zustand ist das Ventilelement 68 des Entlüftungsventils 18 verliersicher und lösbar mit dem Aufnahmefortsatz 66 der Drucksensoreinheit 14 verbunden. Hierzu weist der Aufnahmefortsatz 66 der Drucksensoreinheit 14 ein Außengewinde 76 auf, das mit dem Innengewinde 74 der Ausnehmung 70 des Ventilelements 68 korrespondiert. Das Ventilelement 68 ist mit dem Bereich der Ausnehmung 70, der den größeren Durchmesser aufweist auf das Außengewinde 76 des Aufnahmefortsatzes 66 der Drucksensoreinheit 14 aufgeschraubt. Das Ventilelement 68 des Entlüftungsventils 18 sichert die Drucksensoreinheit 14 in Axialrichtung 62 in der Grundkörpereinheit 10.

In einem Endbereich des Aufnahmefortsatzes 66, der der Ausgabeeinheit 54 abgewandt angeordnet ist, ist ein Filterelement 78 vorgesehen. Das Filterelement 78 ist aus einem Filz gebildet. Das Filterelement kann auch von anderen, einem Fachmann als sinnvoll erscheinenden Materialien gebildet sein. Das Filterelement 78 trennt die Ausnehmung 70 des Ventilelements 68 in Axialrichtung 62 von einer nicht dargestellten Einlassöffnung der Drucksensoreinheit 14.

Das Ventilelement 68 des Entlüftungsventils 18 weist eine Dichtfläche 106 auf. Die Dichtfläche 106 ist von der Mantelfläche des kegelstumpfförmigen Bereichs des Ventilelements 68 gebildet. Die Dichtfläche 106 liegt in einem montierten Zustand an einer Dichtfläche 108 einer Ventilaussparung 80 an. Die Ventilaussparung 80 ist in der Grundkörpereinheit 10 des Dentalgerätetankdeckels 16 angeordnet. Das Ventilelement 68 und die Ventilaussparung 80 bilden einen Formschluss. Das Ventilelement 68 verschließt die Ventilaussparung 80 luftdicht, indem die Dichtflächen 106, 108 aneinander anliegen.

An einer der Ventilaussparung 80 zugewandten Seite der Grundkörpereinheit 10 ist ein Filtergehäuse 82 angeordnet. Das Filtergehäuse 82 ist verliersicher und lösbar an der Grundkörpereinheit 10 befestigt. Das Filtergehäuse 82 weist eine zylinderförmige Seitenwand 84 auf, die sich parallel zur Axialrichtung 62 erstreckt. Das Filtergehäuse 82 weist zudem eine runde Bodenplatte 86 auf. Die zylinderförmige Seitenwand 84 des Filtergehäuses 82 weist ein Innengewinde 88 auf. Das Innengewinde 88 des Filtergehäuses 82 korrespondiert mit einem Außengewinde 90 der Grundkörpereinheit 10. Das Außengewinde 90 ist in einer Radialrichtung 92, von der Rotationssymmetrieachse 72 nach außen betrachtet, nach der Ventilaussparung 80 einstückig der Grundkörpereinheit 10 vorgesehen. Das Filtergehäuse 82 ist auf das Außengewinde 90 der Grundkörpereinheit 10 aufgeschraubt.

Die runde Bodenplatte 86 weist in der Mitte eine in Axialrichtung 62 durchgehende Ausnehmung 94 auf. Die Bodenplatte 86 und die Seitenwand 84 sind einstückig miteinander verbunden. In Axialrichtung 62 ist zwischen der Grundkörpereinheit 10 und dem Filtergehäuse 82 ein Dichtungselement 96 angeordnet. Das Dichtungselement 96 ist von einem Dichtungsring gebildet.

Zudem ist ein weiteres Filterelement 98 vorgesehen. Das weitere Filterelement 98 ist verliersicher und lösbar mit dem Filtergehäuse 82 verbunden. Das weitere Filterelement 98 ist an der Bodenplatte 86 des Filtergehäuses 82 befestigt und erstreckt sich in Axialrichtung 62 von der Bodenplatte 86 entgegen einer Erstreckung der Seitenwand 84. Das weitere Filterelement 98 weist ein Außengewinde 100 auf, das mit einem Innengewinde 102 der Ausnehmung 94 der Bodenplatte 86 korrespondiert. Das weitere Filterelement 98 ist in die Ausnehmung 94 der Bodenplatte 86 eingeschraubt.

Die als Dentalgerätetankdeckel 16 ausgebildete Grundkörpereinheit 10 ist auf den als Dentalgerätetankbehälter 22 ausgebildeten Grundkörper 104 aufgeschraubt. Der Dentalgerätetankbehälter 22 der Dentalgerätetankeinheit 40 nimmt Strahlgut auf. Zudem ist in der Dentalgerätetankeinheit 40 Luft angeordnet, die im Vergleich zu einer Umgebung der Dentalgerätetankeinheit 40 unter einem Überdruck steht. Die Luft innerhalb der Dentalgerätetankeinheit 40 tritt durch das weitere Filterelement 98 in das Filtergehäuse 82 ein, wobei Strahlgut und Staub durch das weitere Filterelement 98 aufgefangen werden. Die Luft tritt zudem durch den Bereich der Ausnehmung 70 des Ventilelements 68 mit dem kleinen Radius in die Drucksensoreinheit 14 ein. Die Drucksensoreinheit 14 sensiert den Wert des Überdrucks und gibt diesen Wert über die Ausgabeeinheit 54 an einen Bediener weiter. Das Filterelement 78 verhindert dabei zudem ein Eintreten von Staub, Schmutz oder Strahlgut in die Drucksensoreinheit 14.

Der Überdruck in der Dentalgerätetankeinheit 40 drückt das Ventilelement 68 gegen die Ventilaussparung 80, sodass die Dichtflächen 106, 108 aneinander anliegen und die Dentalgerätetankeinheit 40 nach außen luftdicht abgeschlossen ist. Um den Überdruck in der Dentalgerätetankeinheit 40, beispielsweise vor einem Öffnen der Dentalgerätetankeinheit 40, an den Druck der Umgebung der Dentalgerätetankeinheit 40 anzupassen, ist ein Betätigungselement 20 für das Entlüftungsventil 18 vorgesehen. Die Drucksensoreinheit 14 dient als Betätigungselement 20 für das Entlüftungsventil 18. Drückt ein Bediener in Axialrichtung 62, von der Ausgabeeinheit 54 zum Entlüftungsventil 18 betrachtet, auf die Drucksensoreinheit 14, bzw. auf das Schutzelement 60 der Ausgabeeinheit 54, bewegt sich die Drucksensoreinheit 14 in die selbe Axialrichtung 62. Das an dem Aufnahmefortsatz 66 der Drucksensoreinheit 14 befestigte Ventilelement 68 des Entlüftungsventils 18 bewegt sich aus einer Dichtungsstellung von der Ventilaussparung 80 weg. Dadurch bildet sich ein Spalt, durch den Luft aus dem Inneren der Dentalgerätetankeinheit 40 zwischen der Drucksensoreinheit 14 und dem Aufnahmebereich 48 der Grundkörpereinheit 10 hindurch nach außen dringen kann. Dadurch findet ein Druckausgleich zwischen der Umgebung und dem Inneren der Dentalgerätetankeinheit 40 statt.

### Bezugszeichen

- 10: Grundkörpereinheit
- 12: Sensoreinheit
- 14: Drucksensoreinheit
- 16: Dentalgerätetankdeckel
- 18: Entlüftungsventil
- 20: Betätigungselement
- 22: Dentalgerätetankbehälter
- 24: Dentalstrahlgerät
- 26: Bearbeitungskammer
- 28: Eingriffausnehmung
- 30: Deckel
- 32: Dichtungselement
- 34: Bearbeitungswerkzeug
- 36: Boden
- 38: Kunststoffgitter
- 40: Dentalgerätetankeinheit
- 42: Einstelleinheit
- 44: Gewinde
- 46: Gewinde
- 48: Aufnahmebereich
- 50: Seitenwand
- 52: Führungsfläche
- 54: Ausgabeeinheit
- 56: Anzeigeelement
- 58: Zeigerelement
- 60: Schutzelement
- 62: Axialrichtung
- 64: Führungsbereich
- 66: Aufnahmefortsatz
- 68: Ventilelement
- 70: Ausnehmung
- 72: Rotationssymmetrieachse
- 74: Innengewinde
- 76: Außengewinde
- 78: Filterelement
- 80: Ventilaussparung
- 82: Filtergehäuse
- 84: Seitenwand
- 86: Bodenplatte
- 88: Innengewinde
- 90: Außengewinde
- 92: Radialrichtung
- 94: Ausnehmung
- 96: Dichtungselement
- 98: Filterelement
- 100: Außengewinde
- 102: Innengewinde
- 104: Grundkörpereinheit
- 106: Dichtfläche
- 108: Dichtfläche

## Patentansprüche

1. Dentalgerätetankvorrichtung, insbesondere Dentalstrahlgerätetankvorrichtung, mit zumindest einer Grundkörpereinheit (10),
**gekennzeichnet durch**
zumindest eine in die Grundkörpereinheit (10) zumindest teilweise integrierte Sensoreinheit (12), die von einer als Manometer ausgebildeten Drucksensoreinheit (14) gebildet ist, wobei die Sensoreinheit (12) zumindest teilweise von der Grundkörpereinheit (10) umschlossen ist.

2. Dentalgerätetankvorrichtung nach Anspruch 1,
**dadurch gekennzeichnet,**
**dass** die Grundkörpereinheit (10) von einem Dentalgerätetankdeckel (16) gebildet ist.

3. Dentalgerätetankvorrichtung nach einem der vorhergehenden Ansprüche,
**gekennzeichnet durch**
wenigstens ein Entlüftungsventil (18), das zumindest teilweise mit der Sensoreinheit (12) verbunden ist.

4. Dentalgerätetankvorrichtung nach einem der vorhergehenden Ansprüche,
**dadurch gekennzeichnet,**
**dass** die Sensoreinheit (12) bewegbar in der Grundkörpereinheit (10) gelagert ist.

5. Dentalgerätetankvorrichtung nach einem der vorhergehenden Ansprüche,
**dadurch gekennzeichnet,**
**dass** die Sensoreinheit (12) verschiebbar in der Grundkörpereinheit (10) gelagert ist.

6. Dentalgerätetankvorrichtung nach Anspruch 3,
**dadurch gekennzeichnet,**
**dass** die Sensoreinheit (12) als Betätigungselement (20) für das Entlüftungsventil (18) dient.

7. System zumindest mit einer ersten Dentalgerätetankvorrichtung nach einem der Ansprüche 1 bis 6 und zumindest mit einer zweiten Dentalgerätetankvorrichtung, wobei eine der zumindest zwei Dentalgerätetankvorrichtungen einen Dentalgerätetankdeckel (16) umfasst und wobei die andere der zumindest zwei Dentalgerätetankvorrichtungen einen Dentalgerätetankbehälter (22) umfasst.

## Claims

1. Dental apparatus tank device, in particular dental blasting apparatus tank device, with at least one base body unit (10),
**characterised by**
at least one sensor unit (12), which is at least partially integrated into the base body unit (10) and is implemented by a pressure sensor unit (14) that is embodied as a manometer, wherein the sensor unit (12) is at least partially encompassed by the base body unit (10).

2. Dental apparatus tank device according to Claim 1,
**characterised in that**
the base body unit (10) is implemented by a dental apparatus tank cover (16).

3. Dental apparatus tank device according to one of the preceding Claims,
**characterised by**
at least one venting valve (18), which is at least partially connected to the sensor unit (12).

4. Dental apparatus tank device according to one of the preceding Claims,
**characterised in that**
the sensor unit (12) is movably supported in the base body unit (10).

5. Dental apparatus tank device according to one of the preceding Claims,
**characterised in that**
the sensor unit (12) is slideably supported in the base body unit (10).

6. Dental apparatus tank device according to Claim 3,
**characterised in that**
the sensor unit (12) is serves as an actuation element (20) for the venting valve (18).

7. System at least with a first dental apparatus tank device according to one of Claims 1 to 6 and at least with a second dental apparatus tank device, wherein one of the at least two dental apparatus tank devices comprises a dental apparatus tank cover (16) and the other one of the at least two dental apparatus tank devices comprises a dental apparatus tank container (22).

## Revendications

1. Dispositif de réservoir d'appareil dentaire, notamment dispositif de réservoir d'appareil de sablage dentaire, avec au moins une unité de corps de base (10),
**caractérisé par**
au moins une unité de capteur (12), laquelle est au moins partiellement intégrée dans l'unité de corps de base (10) et est mise en oeuvre par une unité de capteur de pression (14) implémentée comme manomètre, l'unité de capteur (12) étant au moins partiellement entourée par l'unité de corps de base (10).

2. Dispositif de réservoir d'appareil dentaire selon la revendication 1,
**caractérisé en ce que**
l'unité de corps de base (10) est implémentée par un couvercle de réservoir d'appareil dentaire (16).

3. Dispositif de réservoir d'appareil dentaire selon l'une quelconque des revendications précédentes,
**caractérisé par**
au moins une valve d'échappement (18), laquelle est au moins partiellement connectée avec l'unité de capteur (12).

4. Dispositif de réservoir d'appareil dentaire selon l'une quelconque des revendications précédentes,
**caractérisé en ce que**
l'unité de capteur (12) est supportée dans l'unité de corps de base (10) de manière mobile.

5. Dispositif de réservoir d'appareil dentaire selon l'une quelconque des revendications précédentes,
**caractérisé en ce que**
l'unité de capteur (12) est supportée dans l'unité de corps de base (10) de manière déplaçable.

6. Dispositif de réservoir d'appareil dentaire selon la revendication 3,
**caractérisé en ce que**
l'unité de capteur (12) sert comme élément d'actionnement (20) pour la valve d'échappement (18).

7. Système au moins avec un premier dispositif de réservoir d'appareil dentaire selon l'une quelconque des revendications 1 à 6 et au moins avec un deuxième dispositif de réservoir d'appareil dentaire, un des au moins deux dispositifs de réservoir d'appareil dentaire comprenant un couvercle de réservoir d'appareil dentaire (16) et l'autre des au moins deux dispositifs de réservoir d'appareil dentaire comprenant un récipient de réservoir d'appareil dentaire (22).
